# EUROPEAN PATENT SPECIFICATION

(11) **EP 2 811 821 B1**
(45) Date of publication and mention of the grant of the patent: **05.06.2019**
(21) Application number: 13703116.7
(22) Date of filing: 04.02.2013
(51) Int. Cl.: A01G 27/04

(54) **AUTOMATIC PLANT WATERING DEVICES**
SELBSTBEWÄSSERUNGSSYSTEM
DISPOSITIF D'ALIMENTATION AUTOMATIQUE EN EAU

(30) Priority: 08.02.2012 GB 201202224
(43) Date of publication of application: 17.12.2014
(73) Proprietor: Exel Industries S.A., 51200 Epernay (FR)
(72) Inventor: IACIOFANO, Nicolino, High Wycombe Buckinghamshire HP13 6QS (GB); BOUGHTON, Robert, Buckingham Buckinghamshire MK18 4EJ (GB)
(74) Representative: Faulkner, Thomas John
(86) International application number: PCT/GB2013/000043
(87) International publication number: WO 2013/117881

(56) References cited:
- DE-A1- 2 358 982
- DE-U1-202012 010 227
- DE-U1-202012 102 404
- FR-A1- 2 576 177
- US-A- 5 379 547

## Description

This invention relates to automatic plant watering devices, for example, grow bag waterers.

There is, of course, a need to water plants which are grown in containers of one kind or another. Manually watering plants in containers can be a laborious process and therefore it is desirable to have systems and apparatus which can reduce the required labour. Further it is preferable if watering methods used are efficient so that a minimum amount of water is used.

Existing automatic watering systems generally consist of an irrigation system including a computer controlled pump or valve for feeding water through the irrigation system at selected times or under selected conditions.

Such systems are relatively expensive and complex to install and maintain. Further, unless they are extremely sophisticated they can, in some instances, be wasteful of water.

It is the aim of the present invention to provide an alternative watering system which attempts to alleviate at least some of these drawbacks.

FR2576177 and GB2198324 each describe an automatic watering system which has a reservoir for holding water and a plurality of watering portions projecting into carried earth for conveying water into the earth by a wicking action.

According to a first aspect of the present invention there is provided an automatic plant watering device as claimed in claim 1.

The device allows plants planted in a container of earth to be automatically watered with water from the reservoir.

The container of earth may be a grow bag. The automatic plant watering device may be a grow bag waterer.

The container of earth may be a tray of earth. The automatic plant watering device may comprise a tray for carrying earth which is supportable on the support portion and having at least one aperture through which the watering portion extends into the interior of the tray.

The watering portion may extend past the support portion, or to put this another way may extend above the level of the support portion with the watering device in its intended orientation for use.

The wicking material portion may be of fabric. The term fabric is used to indicate a textile type material which will generally be flexible and cloth like, and which might be woven or non-woven. The wicking material portion may comprise a strip of fabric which is supported at a position on the spike portion towards the distal end of the spike. The wicking material portion may extend down from its supported portion towards a base of the reservoir with the device in its intended orientation for use.

The strip of fabric may be supported in a slot in the spike portion and may extend in two directions away from the slot.

Such arrangements facilitate the replacement of the wicking material portion to maintain performance of the device.

The spike portion may comprise a hollow body portion which is open to the interior of the reservoir.

This can allow water in the reservoir to flow into the body portion of the spike portion. This can help in delivery of water to the wicking material portion and help to maximise the volume available within the reservoir for water. This in turn can help minimise the overall size, eg depth, of the reservoir to provide a desired functioning watering time between refills.

The blade may have a curved end carrying a plurality of teeth such that at least some of the teeth are further from a base of the device than others of the teeth. To put this another way some of the teeth may be further above the support portion than others.

Thus if a bag is lowered squarely onto the spike portion, some of the teeth will meet the bag before others of the teeth, so there can be progressing cutting of the bag.

The slot for supporting the wicking material fabric strip may be provided in the blade portion.

The spike portion may comprise a support element at the proximal end of the blade for supporting a carried container of earth. The support element may be provided where the body portion of the spike portion meets the blade portion. The support element may be part of the support portion or act as an additional support portion.

The blade portion may comprise at least one strengthening rib.

There may be a plurality of support portions. Preferably there is a plurality of watering portions.

The automatic watering device may comprise at least one stake receiving socket for receiving and supporting a plant supporting stake.

Typically the stake will be a cane.

Where a tray is provided, this may comprise at least one stake aperture through which a stake may pass for location in the stake receiving socket.

The automatic watering device may comprise a level indicator for indicating the water level in the reservoir.

The level indicator may comprise an indicator member which is pivotally mounted about an axis in the reservoir and has a float portion and an indicator portion which pivot together around the axis as the indicator member pivots, the indicator portion being visible outside of the reservoir and the float portion being arranged for floating on the surface of water in the reservoir and arranged for causing the indicator member to pivot about its axis as the water level changes so causing a change in position of the indicator portion which can be observed by a user.

Correspondingly the indicator member will normally be mounted about an axis which is non-vertical axis when the device is in its operative orientation. The indicator member may be mounted about an axis which is non-perpendicular to a base of the device. Typically the indicator member will be mounted about an axis which is parallel to a base of the device.

The indicator member may comprise a wheel.

The indicator portion may comprise at least a portion of a rim of the wheel.

A housing of the device may comprise a slot through which the rim of the wheel is observable.

The wheel may be generally symmetrical except for the float portion. The float portion may comprise an enlarged portion of the wheel. The float portion may be provided at the rim of the wheel.

The float portion may be solid where the material of the float portion has a density which is less than that of water. Alternatively the float portion may be hollow.

The indicator member may be moulded as a single piece.

The watering device may have a connector in at least one wall of the reservoir to allow connection of a hose to the watering device.

This may be used to connect the watering device to a water supply and/or another watering device of the same kind. As such plural watering devices may be daisy chained together.

The watering device may be provided to a customer with a connector for fitting in a wall of the reservoir and include a feature to aid making of a hole in the reservoir wall to accept the connector.

The connector may be arranged to accept a standard hose fitting.

The automatic watering device may comprise valve means for controlling inflow of water into the reservoir. The valve means may have an inlet side for connection to a water supply - for example a mains water supply. The valve means may comprise float valve.

The valve means may be provided externally to the reservoir, and may be provided externally to a housing of the watering device.

The valve means may be connected to the reservoir of the watering device via a length of hose.

According to a second aspect of the present invention there is provided an automatic plant watering arrangement comprising at least two automatic plant watering devices of the type defined above which are connected together by hose such that the reservoir in one of the automatic plant watering devices is in fluid communication with the reservoir in another of the automatic plant watering devices.

The at least two automatic plant watering devices may be daisy chained together via respective lengths of hose.

The automatic plant watering arrangement may comprise valve means for controlling inlet of water into at least one of the watering devices. The valve means may be provided to control inlet of water into the watering device at a head of the daisy chain.

Embodiments of the present invention will now be described, by way of example only, with reference to the accompanying drawings in which:
Figure 1 schematically shows an automatic plant watering device which is a grow bag waterer with a grow bag in place;
Figure 2 shows the automatic plant watering device of Figure 1 with the grow bag removed and a tray for containing earth positioned in its place;
Figure 3 shows the automatic plant watering device of Figures 1 and 2 without a grow bag or tray in place;
Figure 4 shows a section on line IV-IV of the automatic watering device shown in Figure 3;
Figures 5A and 5B respectively show a perspective view and plan view of a spike portion of the watering device of Figures 1 to 4 shown in isolation;
Figures 6A and 6B show more detail of a level indicator included in the watering device of Figures 1 to 4. Figure 6B is a detail of a portion of the level indicator shown in Figure 6A; and
Figure 7 schematically shows an automatic plant watering arrangement including plural, in this case two, automatic plant watering devices of the type shown in Figures 1 to 6.

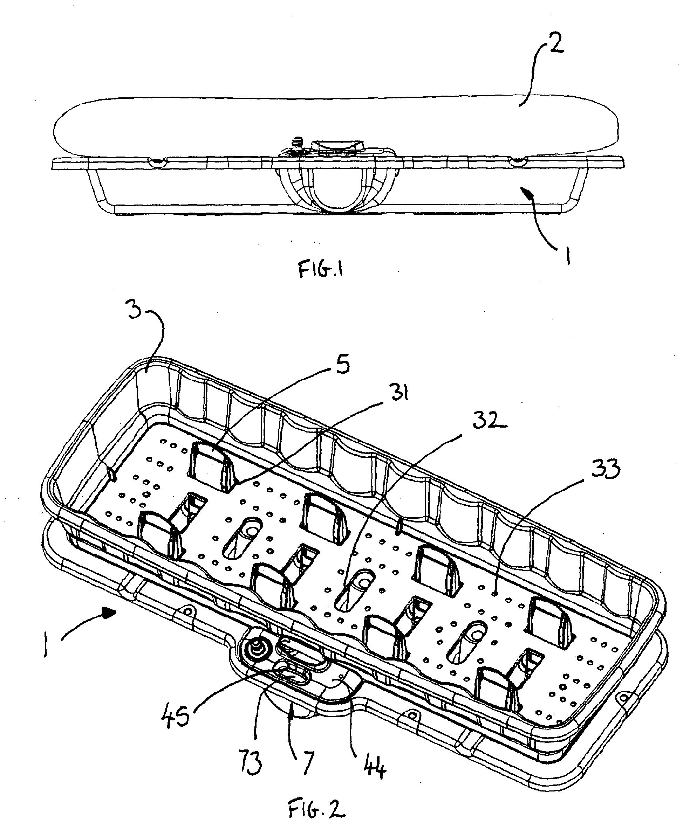

Figure 1 shows an automatic plant watering device 1 with a grow bag 2 in situ to be automatically watered by the automatic watering device 1. As is well known, a grow bag consists of a container of earth or other growing medium in a plastic bag. In use, holes are cut in the top surface of the plastic bag to enable plants to be planted in the contained earth/growing medium. Normally these plants would be watered using a watering can or hose pipe. The present automatic watering device removes the need for such manual watering.
Figure 2 shows the same watering device 1 as shown in Figure 1 but in the place of a grow bag 2 there is provided an earth container tray 3 which can be filled with earth or another growing medium into which plants can be planted. The automatic plant watering device can provide watering of plants planted in the tray 3.

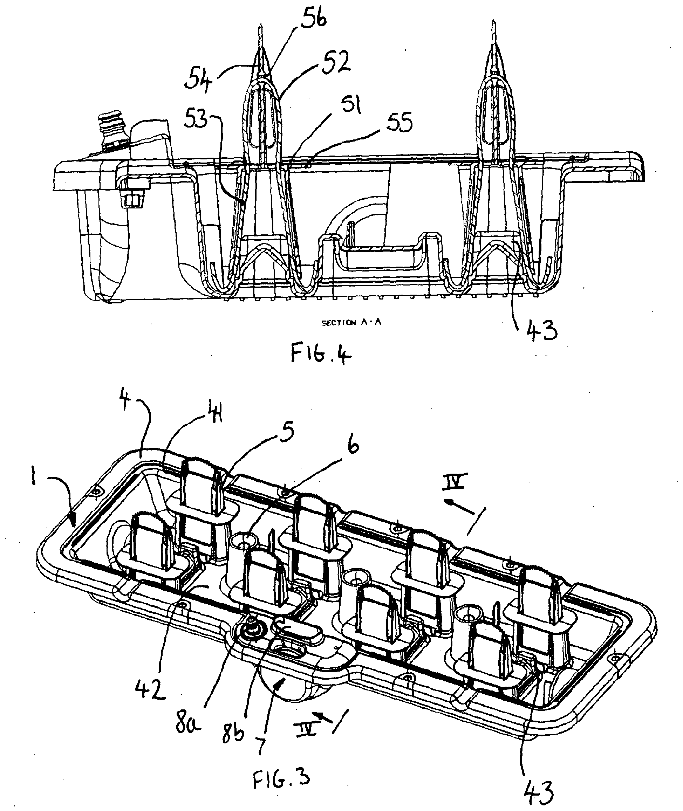

Figures 3 and 4 show the plant watering device without a grow bag 2 or earth container tray 3 in position.

The main part of the automatic watering device 1 as shown in Figures 3 and 4 comprises a water container tray 4 which acts as a reservoir for holding water to be used in watering plants planted in, for example, the grow bag 2 or earth container tray 3. The water container tray 4 comprises a rim 41 which acts as a support portion for supporting a container of earth put onto the watering device 1. That is to say for supporting, for example, a grow bag 2 or earth containing tray 3.

Mounted within the water container tray 4 are a plurality of watering portions 5. The watering portions 5 are mounted in a base 42 of the tray 4 and project upwardly (with the device in its intended orientation for use) beyond the level of the rim 41 which acts as a support portion. The watering portions 5 are arranged to project into a container of earth 2/3 provided on the water container tray 4. Further the watering portions are arranged to puncture through the lower surface of a grow bag 2 when placed on the device.

Also provided on the base 42 of the tray 4 is at least one, and in this case three, stake supporting sockets 6 which have an internal bore arranged to receive a plant supporting stake (not shown) such as a cane. In use, such a plant supporting stake will be pushed, by the user, through the earth held in the container above the main part of the watering device 1 and into the socket 6. This can provide much better stability for the stake than would be possible if it is merely pushed into the earth in the earth containing container.

The automatic plant watering device 1 includes a level indicator 7 (which will be described in more detail below) which is for indicating the level of water in the reservoir formed by the tray 4.

The watering device 1 includes two water inlets for facilitating filling of the reservoir in the tray 4 with water whilst a container of earth for example a grow bag 2 or the tray 3 is in position. These inlets are a hose connector 8a which may, for example, be of a standard male fitting design for receiving a push fit fitting and an opening 8b through which water may be directly poured from, for example, a watering can or a free end of a hose.

In the present embodiment, as shown in Figure 3, there are eight watering portions 5, although of course differing numbers may be used. Furthermore in the present embodiment the watering portions 5 are removeably mounted in the tray 4. Mounting portions 43 are provided in the base 42 of the tray on which the watering portions 5 may be located. In the present embodiment, whilst there are eight watering portions 5, there are in fact 12 mounting portions 43. In Figure 3, for example, four mounting portions 43 may be seen running down the centre of the base 42 of the tray 4 which do not have watering portions 5 mounted thereon. On the other hand the mounting portions 43 which are carrying watering portions 5 in Figure 3 are largely obscured. Parts of these can be seen for example in Figure 4.

A user is able to selectively locate the watering portions 5 on the mounting portions in a desired configuration.

It may be noted that the earth container tray 3 is shown with apertures 31 through which the watering portions 5 can project. As supplied to the user these apertures may be blanked off by knockout portions (not shown) which may be knocked out by the user to match the configuration of watering portions 5 which it is desired to use. Thus, for example, if, as in the present case, no watering portions 5 are placed on the central run of mounting portions 43, the corresponding knockout portions of the tray may be left in place (although they are shown removed in Figure 2).

The base of the earth container tray 3 also includes stake apertures 32 which register with the stake receiving sockets 6 such that a stake may be inserted through the earth and base of earth container tray 3 into the socket 6 when the earth container tray 3 is used. Further the base of the earth container tray 3 includes a plurality of smaller drainage apertures 33 of a size chosen to retain earth whilst allowing any excess water to run back through the earth container tray 3 into the reservoir in the water holding tray 4.

As most clearly seen in Figure 4, each watering portion 5 comprises a spike portion 51 and a wicking material portion 52. The wicking material portion 52 is in the form of a strip of wicking fabric which is supported by the spike portion 51.

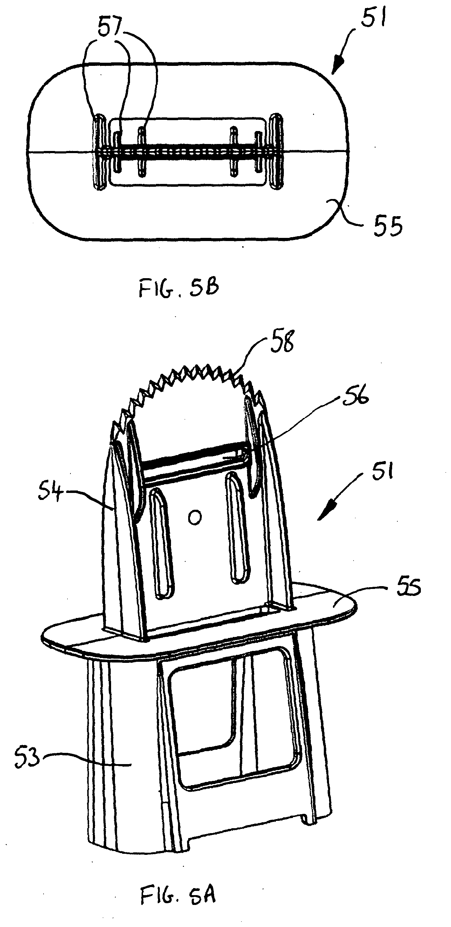

One of the spike portions 51 is shown in isolation in Figures 5A and 5B. Each spike portion 51 has a body portion 53 which is hollow with its interior open to the reservoir formed in the water holding tray 4 and above this, a blade portion 54. The blade portion is generally flat and relatively broad in one direction. Between the blade portion 54 and body portion 53 there is provided a support element 55 which will help support a container of earth, such as the earth container tray 3 or grow bag 2, which is placed on the watering device 1.

The blade portion 54 includes a slot 56 through which the wicking material 52 passes as most clearly seen in Figure 4. Slots are also provided in the support element 55 adjacent to the blade 54 through which the wicking element passes as again most clearly seen in Figure 4.

The blade portion 54 has a number of supporting ribs 57 as best seen in Figures 5A and 5B which help strengthen the blade 54 so that it can better perform its cutting function and can also serve to locate and support the wicking fabric 52.

The distal end of the blade 54 is provided with a plurality of teeth 58 and the end of the blade 54 is curved such that some of the teeth 58 are further from a base of the spike portion 51 (as well as further from the support element 55) than others of the teeth 58. This means that when the teeth 58 meet for example a bag wall of a grow bag 2 placed onto the watering device 1, there may be a staged rupturing of the bag wall to assist in the puncturing performance of the blade 54. Further the plurality of teeth 58 are chosen to give a perforating effect on the bag wall as an initial step in the cutting.

As best seen in Figure 4, when the watering portion 5 is installed on its mounting portion 43, the wicking material 52 passes between the side walls of the body portion 53 of the spike 51 and the mounting portion 43 and out under the end of the spike portion 51. Further, an excess length of the wicking fabric may be provided so that there is more wicking fabric 52 in the reservoir for drawing in water. This additional length of wicking fabric may adopt a U-shape as shown in Figure 4 as it contacts against surrounding components.

As alluded to above, when a container of earth such as a grow bag 2 or tray 3 full of earth it is positioned on the main part of the watering device 1 the container is supported by the rim 42 of the water containing tray 4 and also by the support elements 55 of each of the watering portions 5. The blade portion 54 projects into the body of earth within the container 2, 3 as do the portions of wicking material 52 supported by the blade 54. Thus water may be drawn up from the reservoir in the tray 4 by the wicking material 52 and dispersed into the earth provided in the carried container 2, 3.

Because the body portion 53 is hollow and open to the reservoir, this increases the available volume for water in the reservoir and also can help improve the delivery of water to the portion of the wicking material 52 which is in the reservoir to help transport of this water into the earth in the container 2, 3 above.

Further, because the wicking material is separate from the spike 51 and held in position by being fed through appropriate slots and trapped under the spike portion 51 as this is mounted on the mounting portion 43, then when desirable, the wicking material portions 52 may be renewed to help ensure good performance of the watering device.

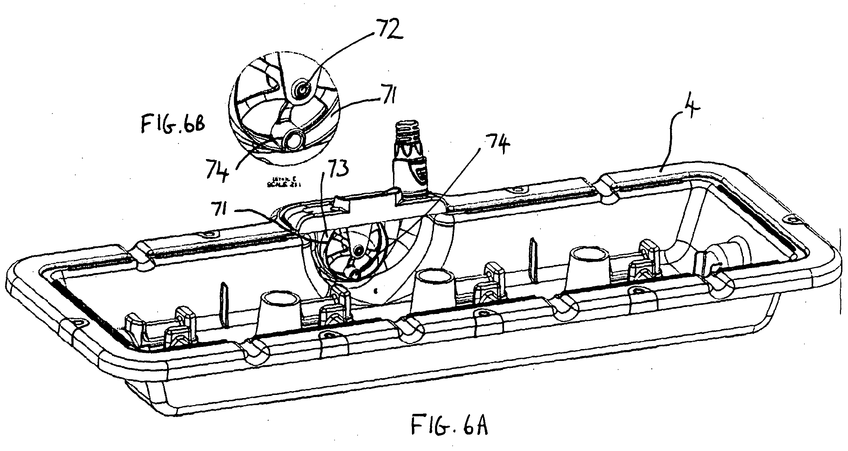

As mentioned above, the plant watering device 1 comprises a level indicator 7. The level indicator 7 is housed in a recess in the water container tray 4 with a housing cover portion 44 above it. The level indicator is best seen in Figures 6A and 6B in conjunction with Figure 2. The level indicator 7 comprises a level indicator wheel 71 which can be seen in Figure 6A and 6B. This is mounted for pivotal, and in the present embodiment rotational, movement around an axis 72 which in this embodiment is parallel to the base 42 of the water containing tray 4 and hence the base of the device as a whole. The wheel has a rim 73, the outer surface of which can be seen through an aperture 45 provided in the housing cover portion 44 of the tray 4 as shown in Figure 2.

The wheel 71 carries a float portion 74. In the present embodiment the float portion 74 is moulded in one piece with the remainder of the wheel. The float portion 74 is provided adjacent the rim 73. In the present embodiment the float portion 74 is in the form of a hollow cylinder which is moulded with the rim 73.

As the water level in the reservoir in the water container tray 4 changes, the float portion 74 will tend to float on or at the surface of the water. Thus the float portion 74 may rotate from the lower position shown in Figure 6A when the water level is at a minimum to a point diametrically opposed to this when the water level is at a maximum. As this occurs the wheel 71 will rotate about the axis 72 such that the portion of rim 73.which is viewable through the aperture 45 and shown in Figure 2 will move. Thus provided that the rim is provided with some form of marking or difference along its length, the user will be able to determine the water level in the reservoir by observing the rim 73.

In the present embodiment the wheel 71 is moulded from a plastics material which has a density which is less than that of water. Thus a solid portion of this material may act as the float. In an alternative, a hollow (and sealed) float portion 74 may be used and appropriately attached to the wheel 71.

Of course whilst the use of a wheel is simple, attractive and preferred, different forms of indicator member might be used to achieve the same function. Provided there is an indicator portion, for example a rim and a floating portion 74 which pivot together around the axis, the remainder of the indicator member is not of critical importance. Thus for example the indicator member could be an incomplete wheel or comprise two arms one carrying the float member and one carrying an indication member.

Furthermore it is not necessary for the indicator member to be formed from a single piece of material.

In a particular alternative the float portion 74 may comprise float material portion. This may be of closed cell foam which will have internally trapped air or gas. There may be a closed cell foam plug or disc. Where the float portion 74 comprises a hollow portion as shown in Figures 6A and 6B this may be provided with, and preferably filled with, a closed cell foam portion, which can be in the shape of a disc or plug. This will improve the buoyancy of the float portion.

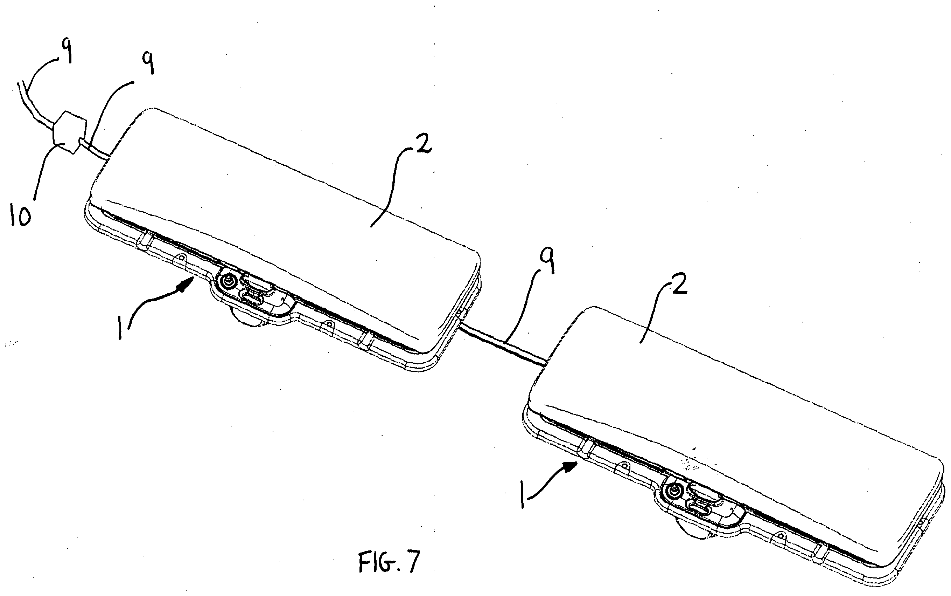

Figure 7 shows an automatic plant watering arrangement which comprises two grow bag waterers of the type described above daisy chained together via hose 9 so that their reservoirs are in fluid communication. In other embodiments there may be more grow bag wateres 1 daisy chained together.

One of the grow bag waters 1, which can be considered to be at the head of the chain has an associated valve means 10. In the present embodiment this valve means is connected by hose 9 to the reservoir of the grow bag waterer 1. The arrangement is connectable to a water supply (not shown) by a further hose 9.

Thus the reservoirs of the grow bag waterers may be automatically filed from the water supply under the control of the valve means. The valve means may comprise a float valve for controlling the supply of water in dependence on the level of water in the reservoirs of the grow bag waterers.

## Claims

1. An automatic plant watering device comprising a reservoir (4) for holding water, a support portion (41) for supporting a container of earth above the reservoir (4) in use and at least one projecting watering portion (5) extending from the reservoir and for extending into a supported container of earth in use, the watering portion (5) comprising a wicking material portion (52) for conveying water under capillary action from the reservoir towards a supported container of earth in use, wherein the watering portion comprises a spike portion (51), which supports the wicking material portion (52), **characterised by** the spike portion (51) having a blade portion (54) at its distal end for cutting through a container wall with the blade portion (54) having a plurality of perforating teeth (58) for perforating a bag wall of a grow bag as a grow bag is lowered into position on the device.

2. An automatic plant watering device according to claim 1 in which the blade (54) has a curved end carrying the plurality of teeth (58) such that at least some of the teeth are further from a base of the device than others of the teeth.

3. An automatic plant watering device according to claim 1 or 2 in which the spike portion (51) comprises a support element (55) at the proximal end of the blade for supporting a carried container of earth.

4. An automatic plant watering device according to any of claims 1 to 3 in which the wicking material portion (52) is of fabric.

5. An automatic plant watering device according to claim 4 in which the wicking material portion (52) comprises a strip of fabric which is supported at a position on the spike portion (51) towards the distal end of the spike.

6. An automatic plant watering device according to claim 5 in which the wicking material portion (52) is supported in a slot in the spike portion (51).

7. An automatic plant watering device according to any preceding claim in which the spike portion (51) comprises a hollow body portion (53) which is open to the interior of the reservoir.

8. An automatic plant watering device according to any preceding claim in which the automatic watering device comprises a level indicator (7) for indicating the water level in the reservoir.

9. An automatic plant watering device according to claim 8 in which the level indicator (7) comprises an indicator member (71) which is pivotally mounted about an axis (72) in the reservoir and has a float portion (74) and an indicator portion which pivot together around the axis as the indicator member (71) pivots, the indicator portion being visable outside of the reservoir and the float portion (74) being arranged for floating on the surface of the water in the reservoir and arranged for causing the indicator member (71) to pivot about its axis as the water level changes so causing a change in position of the indicator portion which can be observed by a user.

10. An automatic plant watering device according to claim 9 in which the indicator member (71) is mounted about an axis which is non-perpendicular to a base of the device.

11. An automatic plant watering device according to claim 9 or 10 in which the indicator member (71) comprises a wheel.

12. An automatic plant watering device according to any one of claims 9 to 11 in which the indicator member (71) is moulded as a single piece.

13. An automatic plant watering device according to any preceding claim in which the automatic watering device comprises at least one stake receiving socket (6) for receiving and supporting a plant supporting stake.

14. An automatic plant watering device according to any preceding claim further comprising a tray (3) for carrying earth which is supportable on the support portion (41) and having at least one aperture through which the watering portion (5) extends into the interior of the tray.

15. An automatic plant watering arrangement comprising at least two automatic plant watering devices (1) according to any preceding claim connected together such that the reservoir in one of the automatic plant watering devices is in fluid communication with the reservoir in another of the automatic plant watering devices.

## Patentansprüche

1. Automatische Pflanzenbewässerungsvorrichtung mit einem Speichergefäß (4) zum Aufnehmen von Wasser, einem Stützteil (41) zum Abstützen eines Behälters mit Erde oberhalb des Speichergefäßes (4) im Gebrauch und mindestens einem vorstehenden Bewässerungsteil (5), das sich von dem Speichergefäß aus erstreckt und zum Erstrecken in einen abgestützten Behälter mit Erde im Gebrauch ist, wobei das Bewässerungsteil (5) ein Dochtmaterialteil (52) zum Fördern von Wasser unter Kapillarwirkung von dem Speichergefäß hin zu einem abgestützten Behälter mit Erde aufweist, wobei das Bewässerungsteil einen Dornteil (51) aufweist, das das Dochtmaterialteil (52) trägt, **gekennzeichnet dadurch, dass** das Dornteil (51) ein Schneidenteil (54) an seinem fernen Ende zum Schneiden durch eine Behälterwand hat, wobei das Schneidenteil (54) eine Vielzahl von durchlöchernden Zähnen (58) zum Durchlöchern einer Beutelwand eines Pflanzbeutels, während ein Pflanzbeutel in Position auf der Vorrichtung abgesenkt wird, hat.

2. Automatische Pflanzenbewässerungsvorrichtung nach Anspruch 1, bei der die Schneide (54) ein gebogenes Ende hat, das die Vielzahl von Zähnen (58) derart trägt, dass mindestens einige der Zähne weiter weg von einem Unterteil der Vorrichtung sind als andere der Zähne.

3. Automatische Pflanzenbewässerungsvorrichtung nach Anspruch 1 oder 2, bei der das Dornteil (51) ein Stützelement (55) am nahen Ende der Schneide zum Abstützen eines getragenen Behälters mit Erde aufweist.

4. Automatische Pflanzenbewässerungsvorrichtung nach einem der Ansprüche 1 bis 3, bei der das Dochtmaterialteil (52) aus Stoff ist.

5. Automatische Pflanzenbewässerungsvorrichtung nach Anspruch 4, bei der das Dochtmaterialteil (52) einen Stoffstreifen aufweist, der an einer Stelle an dem Dornteil (51) zu dem fernen Ende des Dornes hin abgestützt wird.

6. Automatische Pflanzenbewässerungsvorrichtung nach Anspruch 5, bei der das Dochtmaterialteil (52) in einem Schlitz in dem Dornteil (51) abgestützt wird.

7. Automatische Pflanzenbewässerungsvorrichtung nach irgendeinem vorhergehenden Anspruch, bei der das Dornteil (51) einen hohlen Körperteil (53) aufweist, der zum Innenraum des Speichergefäßes hin offen ist.

8. Automatische Pflanzenbewässerungsvorrichtung nach irgendeinem vorhergehenden Anspruch, bei der die automatische Bewässerungsvorrichtung einen Pegelanzeiger (7) zum Anzeigen des Wasserpegels in dem Speichergefäß aufweist.

9. Automatische Pflanzenbewässerungsvorrichtung nach Anspruch 8, bei der der Pegelanzeiger (7) ein Anzeigerglied (71) aufweist, das um eine Achse (72) in dem Speichergefäß schwenkbar angebracht ist und einen Schwimmerteil (74) und einen Anzeigerteil hat, die zusammen um die Achse schwenken, wenn das Anzeigerglied (71) schwenkt, wobei der Anzeigerteil außerhalb des Speichergefäßes sichtbar ist und der Schwimmerteil (74) ausgebildet ist, um auf der Oberfläche des Wassers in dem Speichergefäß zu schwimmen, und ausgebildet ist, um das Anzeigerglied (71) dazu zu bringen, um seine Achse zu schwenken, wenn sich der Wasserpegel so ändert, dass eine Änderung in der Position des Anzeigerteiles hervorgerufen wird, der von einem Benutzer beobachtet werden kann.

10. Automatische Pflanzenbewässerungsvorrichtung nach Anspruch 9, bei der das Anzeigerglied (71) um eine Achse herum angebracht ist, die zu einem Unterteil der Vorrichtung nicht senkrecht ist.

11. Automatische Pflanzenbewässerungsvorrichtung nach Anspruch 9 oder 10, bei der das Anzeigerglied (71) ein Rad aufweist.

12. Automatische Pflanzenbewässerungsvorrichtung nach irgendeinem der Ansprüche 9 bis 11, bei der das Anzeigerglied (71) als einzelnes Stück geformt ist.

13. Automatische Pflanzenbewässerungsvorrichtung nach irgendeinem vorhergehenden Anspruch, bei der die automatische Bewässerungsvorrichtung mindestens eine Pfahlaufnahme (6) zum Aufnehmen und Abstützen eines Pflanzenstützpfahles aufweist.

14. Automatische Pflanzenbewässerungsvorrichtung nach irgendeinem vorhergehenden Anspruch, ferner mit einer Schale (3) zum Tragen von Erde, die auf dem Stützteil (41) abstützbar ist und mindestens eine Öffnung hat, durch die sich das Bewässerungsteil (5) in den Innenraum der Schale erstreckt.

15. Automatische Pflanzenbewässerungsanordnung, die mindestens zwei automatische Pflanzenbewässerungsvorrichtungen (1) nach irgendeinem vorhergehenden Anspruch aufweist, die miteinander verbunden sind derart, dass das Speichergefäß in einer der automatischen Pflanzenbewässerungsvorrichtungen in Flüssigkeitsverbindung mit dem Speichergefäß in einer anderen der automatischen Pflanzenbewässerungsvorrichtungen ist.

## Revendications

1. Dispositif d'arrosage automatique de plantes comprenant un réservoir (4) destiné à contenir de l'eau, une partie de support (41) destinée à supporter un conteneur de terre au-dessus du réservoir (4) en utilisation, et au moins une partie d'arrosage faisant saillie (5) s'étendant depuis le réservoir et destinée à s'étendre jusque dans un conteneur de terre supporté en utilisation, la partie d'arrosage (5) comprenant une partie de matériau à effet mèche (52) destinée à acheminer de l'eau par capillarité du réservoir vers un conteneur de terre supporté en utilisation, la partie d'arrosage comprenant une partie de pointe (51), qui supporte la partie de matériau à effet mèche (52), **caractérisé en ce que** la partie en pointe (51) présente une partie de lame (54) à son extrémité distale pour couper à travers une paroi de conteneur, la partie de lame (54) ayant une pluralité de dents de perforation (58) pour perforer une paroi de sac d'un sac de culture lorsqu'un sac de culture est abaissé en position sur le dispositif.

2. Dispositif d'arrosage automatique de plantes selon la revendication 1, dans lequel la lame (54) a une extrémité incurvée portant la pluralité de dents (58), de sorte qu'au moins certaines des dents sont plus éloignées d'une base du dispositif que certaines autres des dents.

3. Dispositif d'arrosage automatique de plantes selon la revendication 1 ou 2, dans lequel la partie de pointe (51) comprend un élément de support (55) à l'extrémité proximale de la lame pour supporter un conteneur de terre supporté.

4. Dispositif d'arrosage automatique de plantes selon l'une quelconque des revendications 1 à 3, dans lequel la partie de matériau à effet mèche (52) est en tissu.

5. Dispositif d'arrosage automatique de plantes selon la revendication 4, dans lequel la partie de matériau à effet mèche (52) comprend une bande de tissu qui est supportée dans une position sur la partie de pointe (51) en direction de l'extrémité distale de la pointe.

6. Dispositif d'arrosage automatique de plantes selon la revendication 5, dans lequel la partie de matériau à effet mèche (52) est supportée dans une fente de la partie de pointe (51).

7. Dispositif d'arrosage automatique de plantes selon l'une quelconque des revendications précédentes, dans lequel la partie de pointe (51) comprend une partie de corps creux (53) qui est ouverte à l'intérieur du réservoir.

8. Dispositif d'arrosage automatique de plantes selon l'une quelconque des revendications précédentes, dans lequel le dispositif d'arrosage automatique comprend un indicateur de niveau (7) destiné à indiquer le niveau d'eau dans le réservoir.

9. Dispositif d'arrosage automatique de plantes selon la revendication 8, dans lequel l'indicateur de niveau (7) comprend un élément indicateur (71) qui est monté à pivotement autour d'un axe (72) dans le réservoir et comporte une partie de flotteur (74) et une partie d'indication qui pivote conjointement autour de l'axe lorsque l'élément indicateur (71) pivote, la partie d'indication étant visible à l'extérieur du réservoir et la partie de flotteur (74) étant conçue pour flotter à la surface de l'eau dans le réservoir et agencée pour amener l'indicateur (71) à pivoter autour de son axe lorsque le niveau d'eau change, en provoquant ainsi un changement de position de la partie d'indication pouvant être observée par un utilisateur.

10. Dispositif d'arrosage automatique de plantes selon la revendication 9, dans lequel l'élément indicateur (71) est monté autour d'un axe qui n'est pas perpendiculaire à une base du dispositif.

11. Dispositif d'arrosage automatique de plantes selon la revendication 9 ou 10, dans lequel l'élément indicateur (71) comprend une roue.

12. Dispositif d'arrosage automatique de plantes selon l'une quelconque des revendications 9 à 11, dans lequel l'élément indicateur (71) est moulé sous la forme d'une pièce unique.

13. Dispositif d'arrosage automatique de plantes selon l'une quelconque des revendications précédentes, dans lequel le dispositif d'arrosage automatique comprend au moins une douille de réception de tuteur (6) pour recevoir et supporter un tuteur de support de plantes.

14. Dispositif d'arrosage automatique de plantes selon l'une quelconque des revendications précédentes, comprenant en outre un plateau (3) pour transporter de la terre qui peut être supporté sur la partie de support (41) et présentant au moins une ouverture à travers laquelle la partie d'arrosage (5) s'étend jusqu'à l'intérieur du plateau.

15. Agencement automatique d'arrosage de plantes comprenant au moins deux dispositifs d'arrosage automatique de plantes (1) selon l'une quelconque des revendications précédentes, reliés entre eux de telle sorte que le réservoir de l'un des dispositifs d'arrosage automatique de plantes soit en communication de fluide avec le réservoir de l'autre des dispositifs d'arrosage automatique de plantes.
